# EUROPEAN PATENT SPECIFICATION

(11) **EP 3 382 645 B1**
(45) Date of publication and mention of the grant of the patent: **14.10.2020**
(21) Application number: 18163990.7
(22) Date of filing: 26.03.2018
(51) Int. Cl.: G06T 7/586

(54) **METHOD FOR GENERATION OF A 3D MODEL BASED ON STRUCTURE FROM MOTION AND PHOTOMETRIC STEREO OF 2D SPARSE IMAGES**
VERFAHREN ZUR ERZEUGUNG EINES 3D-MODELLS AUF BASIS VON STRUCTURE FROM MOTION UND PHOTOMETRISCHEM STEREO VON SPARSE 2D BILDERN
PROCÉDÉ DE GÉNÉRATION D'UN MODÈLE 3D À PARTIR DE STRUCTURE FROM MOTION ET STÉRÉO PHOTOMÉTRIQUE D'IMAGES 2D PARCIMONIEUSES

(30) Priority: 27.03.2017 IT 201700033593
(43) Date of publication of application: 03.10.2018
(73) Proprietor: 3Dflow srl, 33100 Udine (IT)
(72) Inventor: Singh, Yash, San Diego (US); Magri, Luca, 20141 Milano (IT); Toldo, Roberto, 37066 Sona (VR) (IT); Fantoni, Simone, 37060 Buttapietra (VR) (IT)
(74) Representative: Bottino, Giovanni

(56) References cited:
- Diego Nehab ET AL: "Efficiently combining positions and normals for precise 3D geometry", ACM Transactions on Graphics (TOG), 1 July 2005 (2005-07-01), pages 536-543, XP055318464, New York DOI: 10.1145/1073204.1073226 Retrieved from the Internet: URL:http://delivery.acm.org/10.1145/108000 0/1073226/p536-nehab.pdf?ip=145.64.254.247 &id=1073226&acc=ACTIVE%20SERVICE&key=E80E9 EB78FFDF9DF.4D4702B0C3E38B35.4D4702B0C3E38 B35.4D4702B0C3E38B35&CFID=996234114&CFTOKE N=41462611&__acm__=1508335429_4be70e4c65e8 6ca2f6e9db6415633ec3 [retrieved on 2017-10-10]
- R. Toldo ET AL: "ACCURATE MULTIVIEW STEREO RECONSTRUCTION WITH FAST VISIBILITY INTEGRATION AND TIGHT DISPARITY BOUNDING", The International Archives of the Photogrammetry, 1 February 2013 (2013-02-01), pages 243-249, XP055414267, DOI: 10.5194/isprsarchives-XL-5-W1-243-2013 Retrieved from the Internet: URL:https://pdfs.semanticscholar.org/e797/ 94c9484c7ab903bfe11cc862d697b3609b3d.pdf [retrieved on 2017-10-10]
- MICHAEL WEINMANN ET AL: "Advances in geometry and reflectance acquisition (course notes)", 20151102; 20151102 - 20151106, 2 November 2015 (2015-11-02), pages 1-71, XP058075388, DOI: 10.1145/2818143.2818165 ISBN: 978-1-4503-3924-7
- PARK JAESIK ET AL: "Multiview Photometric Stereo Using Planar Mesh Parameterization", 2013 IEEE INTERNATIONAL CONFERENCE ON COMPUTER VISION, IEEE, 1 December 2013 (2013-12-01), pages 1161-1168, XP032572744, ISSN: 1550-5499, DOI: 10.1109/ICCV.2013.148 [retrieved on 2014-02-28]
- TAI-PANG WU ET AL: "Dense Photometric Stereo: A Markov Random Field Approach", IEEE TRANSACTIONS ON PATTERN ANALYSIS AND MACHINE INTELLIGENCE, IEEE COMPUTER SOCIETY, USA, vol. 27, no. 11, 1 November 2006 (2006-11-01), pages 1830-1846, XP011149299, ISSN: 0162-8828, DOI: 10.1109/TPAMI.2006.224
- E Northcoleman ET AL: "Obtaining 3-Dimensional Shape of Textured and Specular Surfaces Using Four-Source Photometry'", COMPUTER GRAPHICS AND IMAGE PROCESSING, 1 January 1982 (1982-01-01), pages 309-328, XP055416729, Retrieved from the Internet: URL:https://ac.els-cdn.com/0146664X8290001 6/1-s2.0-0146664X82900016-main.pdf?_tid=40 bf7236-b3e7-11e7-a61e-00000aacb361&acdnat= 1508319326_85fb460b7bdc578b141fbec946d1021 f [retrieved on 2017-10-18]

## Description

The present invention relates to the technical field of processes for 3D modeling starting from images: a 3D model of one or more objects of a scene is created by extracting and analysing information contained in a set of two-dimensional images, of one or more objects of interest in common to all the images. Employed images are acquired by conventional photographic devices operating in the visible spectrum, such as for example cameras of modern smartphones, and they can be both different views of the same scene acquired from different angles, and images acquired by a fixed camera under varying lighting conditions of the environment. The 3D model obtained in this manner provides accurate measurements of the objects of interest, which can be used in many contexts, including but not exclusively, 3D printing, geo-mapping, applications in cultural heritage field and anthropometric measurements for articles of clothing or accessories.

More precisely different techniques are provided that can be used on a 3D reconstruction pipeline based on Structure from Motion (SfM) aiming at improving efficacy and accuracy of the obtained 3D reconstruction. The term Structure from Motion means whole the techniques and processes for the joined estimation of three-dimensional structures and of the motion of cameras starting from a sequence of sparse two-dimensional images. The camera motion is the set of internal parameters (focal length, radial distortion and principal point) and external parameters (3D position of the camera and its orientation) of the devices acquiring the images.

Many approaches have been suggested in literature to solve such problem. Among these approaches we can enumerate Bundle Adjustment methods (Triggs, B., McLauchlan, P.F., Hartley, R.I., & Fitzgibbon, A.W, 2000) or methods based on factorization which try to jointly estimate parameters of the camera and 3D structure.

Other approaches, (e.g. Farenzena, Fusiello, & Gherardi, 2009) are based on the idea of increasing partial models composed of cameras and points, by adding additional cameras by resection steps and new points by intersection steps. Such approaches have the advantage that matches have not to be visible in all the images.

A first fundamental step, shared by all such techniques, is to calculate matches among the several images, that is to determine sets of feature points in the image corresponding to the projection of the same three-dimensional point. The feature points are points belonging to a region of the image different from its neighborhood and are found by using suitable detection algorithms. Matches are found by comparing the local structure about the feature points encoded in vector form by a suitable descriptor (e.g. Tola, Lepetit, & Fua, 2010; Lowe, 2004 Funayama, Yanagihara, Van Gool, Tuytelaars, & Bay, 2010). It is of fundamental importance for the success of each SfM reconstruction technique to have available a suitable number of feature points and accurate matches. Although research focused on improving the calculation of matches in scenarios contaminated by noise and outliers, however in the case of objects provided with a texture-free smooth surface, or in the case there are repeated 3D geometrical structures, such operation is very hard that it does not produce reliable results and it compromises the accuracy of the whole reconstruction.

At the end of the SfM process, the obtained 3D reconstruction is defined except for a scale factor. In order to carry out metric measurements on the reconstructed scene it is therefore necessary to manually scale the reference system, by specifying at least one known measurement of the scene. Usually specific tools are used by means of which the user can define the lengths of distances among points and can specify a reference quantity directly on the 3D model or in one or more two-dimensional images. On the contrary an automatic method that can provide an estimation of the scale directly from the picture or from elements of the scene is missing.

Typically, starting from the output of the SfM pipeline it is possible to extract, by using multiview stereo algorithms, a dense 3D point cloud that, in turn, can be suitably encoded by a polygon mesh. The model obtained in this manner can be improved by integrating information obtained with calibrated photometric stereo techniques. By using images taken from the same viewpoint and by changing the incident light between one and the other image, the calibrated photometric stereo allows, once light directions are known, the albedo, that is a reflection coefficient indicating the colour of the reflectance of the surface, and the local orientation of the surface of the objects of interest to be calculated, encoded as field of surface normals.

Such information can be used to increase the detail of the 3D model, and for producing accurate rendering of the reconstructed surface such that it can be oriented and examined in the space even under different lighting conditions.

Relevant prior art is provided by Diego Nehab et al., "Efficiently combining positions and normals for precise 3D geometry", ACM Transactions on Graphics, 2005, pages 536-543, and Park Jaesik et al., "Multiview Photometric Stereo Using Planar Mesh Parameterization", 2013 IEEE Int. Conf. on Computer Vision, 2013, pages 1161-1168.

Let's us assuming that the surface under examination is a Lambertian surface, that is the apparent brightness of the surface is the same regardless of the angle of view, and that it is also convex and lighted by a punctiform light source placed at an infinite distance, with at least three images of the object being given, the problem can be solved by using simple linear algebra tools. The fact of extending such results to more general scenarios that weaken the assumptions about reflectance, geometry of the object and about configuration of the light sources such to reproduce real application scenarios, on the contrary requires the introduction of more sophisticated mathematical tools, and it is an inverse problem the research is still focusing on. Among several suggested solutions, there is the solution to treat deviations from classic hypotheses as outliers with respect to a low-rank linear model (Wu, L., Ganesh, A., Shi, B., Matsushita, Y., Wang, Y., & Ma, Y.,2010). It is known that measurements of luminous intensities of a Lambertian surface as the incident light changes, obey to a low-rank linear model, particularly they lie in a linear subspace at most of dimension three. By using the knowledge of the direction of the light sources, the luminous measurements lying in this subspace give rise to linear systems whose solution corresponds to the field of surface normals of the object. On the contrary the regions of the object characterized by specular reflections and the portions of the surface lying in a shadow area (self shadow or cast shadow) infringe assumptions of Lambertian surface, diverge from the low-rank model and cannot be used to accurately estimate orientations and color of the surface under examination. Different approaches have been suggested to limit the influence of such phenomena. For example (Mukaigawa, Y., Ishii, Y., & Shakunaga, T., 2007) suggests to use RanSaC, a robust method that samples the space of possible solutions to determine the solution that maximizes the number of inliers. This approach requires a threshold to be specified to determine which luminous intensities have to be considered as inliers and it is not always possible to find a value serving for the aim for all the measurements.

Low-rank approximation techniques, as the analysis of main components and its robust variants, can be used to provide a Lambertian approximation that considers luminous intensities collectively. The success of such approaches requires the use of several images, thus making the image acquisition step more long and complicated. A further problem is the presence of self-shadows in images. A point lies in a self-shadow if the angle between the light incidence direction and its normal determines an obtuse angle. At a self-shadow area irradiance measurements are not available and therefore usually are treated as missing data areas, that can be retrieved by suitable matrix completion techniques (e.g. Zheng, Y., Liu, G., Sugimoto, S., Yan, S., & Okutomi, M., 2012). Shadow areas are determined by specifying suitable thresholds on brightness levels of the image and such operation not always generates accurate results.

The present invention is within the field of 3D reconstruction based on Structure from Motion and multi-view stereo techniques. Firstly a method is disclosed to improve the detection of matching feature points if the objects desired to be reconstructed are characterized by a texture-free smooth surface. Therefore an automatic method is disclosed for estimating the scale of the scene by using EXIF data of images used for 3D reconstruction. Finally a calibrated photometric stereo system robust to outliers is disclosed.

The invention is defined in the appended independent claims.

The present invention relates to a method for generating a 3D model of an object of interest, which method comprises the following steps:
Structure from Motion processing of a plurality of sparse images acquired by one or more acquisition devices for generating a sparse 3D point cloud and a plurality of internal and external parameters of the acquisition devices obtained by processing said images,
Obtaining, from the sparse 3D point cloud and from the internal and external parameters of the acquisition devices, by multiview stereo processing, a dense 3D point cloud for said generation of the 3D model.

The method provides the reconstruction of the surface of said object of interest by the following steps:
a) illuminating the object of interest from different directions;
b) acquiring the plurality of images from a single point of view, each image corresponding to a different lighting direction;
c) automatically recognizing the lighting direction for each acquired image;
d) calculating the vector field of the surface normals;
e) calculating the albedo of the observed surface;
f) reconstructing the orientation of the surface.

In a characteristic, but non limitative, application of the present invention a calibrated photometric stereo system is used to obtain information about the reconstructed object such as orientation and albedo of the surface of the reconstructed object. Images are acquired by a fixed camera operating in the visible spectrum in a controlled luminous environment where environmental lighting is limited to the smallest extent and the object of interest is illuminated by an incident light whose direction changes at each photo acquisition. Optionally, suitable polarizing filters can be arranged on the light devices and on the camera and arranged orthogonally to each other such to limit specular components of light phenomena. Light changes can be obtained both by using light devices arranged in different positions and suitably remotely controlled, and by moving a single light source is several positions. Possibly the acquisition process can be repeated for different positions of the camera. Images are acquired in RAW format and are suitably linearized and demosaiced such to obtain linear images where the pixel values correspond to luminous intensity emitted by the acquired objects of interest.

In the scene, in proximity of the object of interest, a sphere composed of reflecting material is placed. It is used to determine the direction of the light as described below. Optionally, manual or automatic methods can be used to find in the images the pixels corresponding to the object of interest. A three step method allows albedo and surface normals to be estimated in a robust manner. The first step provides an estimation of orientations of the surface by minimizing the least median of the positive part of the residuals. Such process allows the direction of normals to be accurately obtained even if there is 50% of outlier observations for each pixel and it does not require to use thresholds. By calculating the angle defined by the field of normals and by the lighting directions the regions corresponding to self-shadows of the object are estimated which are not considered as missing data. The second step is a low-rank approximation technique. In the last step, the robust estimation is repeated based on the least median of the field of normals, this time luminous intensities obtained in the previous step are used as inputs.

In one embodiment, before step a) a calibration sphere is placed in proximity of the object of interest, such that the calibration sphere is captured in each image, and the automatic recognition of the lighting direction comprises the following steps:
c1) identifying the ellipse corresponding to the apparent contour of the calibration sphere in the image under examination;
c2) finding the pixels of maximum brightness in the ellipse;
c3) calculating the center of an ellipse enclosing the pixels of maximum brightness;
c4) recognizing the lighting direction as the reflection of a back projection beam passing by said center of the ellipse with respect to the normal to the calibration sphere in the intersection point between the back projection beam and the surface of the calibration sphere.

In a further embodiment, the calculation of the vector field of the surface normals comprises the following steps:
d1) grouping the images in subsets of three images;
d2) estimating the normal for each pixel by resolution of a linear system whose coefficients are given by the lighting directions calculated at step c) and whose known term is given by luminous intensities of acquired images, by considering the integer part of residuals of the system as the image subsets change, and determining the solution minimizing the median of residuals;
d3) outlier diagnostics by calculating for each pixel the residuals of all the images as the integer part of the difference between luminous intensities and the scalar product between the estimated normal and the light directions;
d4) calculating the normal as at step d2) by using only light and images not identified as outliers at step d3).

In a further embodiment, the normals calculated at step d) are used to estimate the self-shadow regions in all the images, a subspace of dimension three being estimated for such regions on which luminous intensities are re-projected.

In a further embodiment, at step e) the albedo is calculated as the norm of the normal orientations obtained at step d).

The present invention further relates to a system for generating a 3D model of an object of interest, which system comprises at least one image acquisition device, one or more lighting devices, and a unit processing the acquired images, where the image acquisition device is configured to acquire a plurality of images from a single point of view, said one or more lighting devices are configured to cause a change in the lighting direction of the object of interest and the processing unit is configured to perform the method described above.

The present invention further relates to a processing method of the structure from motion type for a plurality of sparse images of an object of interest and acquired by one or more acquisition devices for generating a sparse 3D point cloud and a plurality of internal and external parameters of the acquisition devices obtained by processing said images, each image being associated to data about focusing point and depth of field, wherein the object of interest is provided with an artificial surface texture.

In a characteristic but non limitative application of the present invention, an image acquisition device, for example a photographic device, is used to capture different images of an object of interest. The object can be both a specific region of naked skin of human anatomy and a full-length individual. Images are acquired from different angles such to have desired perspectives of the object. There are no specific restrictions as regards both space and angle distances defined by the object of interest and by the camera, and no restrictions about the order of acquisition of the photos. An object of known dimensions can be placed in the scene such to be visible in at least one photographic image such to provide a scale reference. Such information can also be provided upon saving the image. Therefore a suitable investigation is performed during and after capturing the images corresponding to the reference object.

The skin surface can be highlighted with a suitable texture by following techniques described below or variants thereof. By way of example and not as a limitation a light layer of face powder (or other substances with similar properties such as talcum powder or flour) can be applied on the skin or the skin can be covered by a light layer of chiffon. Another possibility is to provide the surface of the skin with an artificial texture by applying adhesives. As an alternative it is possible to draw on the skin surface random or geometrical patterns both by using suitable pigments and by projecting such patterns on the skin by means of a projector. Therefore image processing extracts the feature points from each image and then finds matches between such points. Scale, rotation and lighting invariant descriptors are assigned to each point. The orientation of the camera and its internal parameters are therefore extracted from each acquired image. Then scale invariant image processing algorithms are used to determine which image subsets have to be grouped together for an efficient processing. Therefore such information is used to automatically extract internal and external parameters of all the cameras. Now Multiview stereo algorithms are used to extract a dense point cloud. The cloud obtained in this manner therefore is used to recreate an accurate three-dimensional model provided with texture that can be oriented and examined in the space.

In one embodiment, the surface artificial texture comprises objects and/or substances that can be applied on the object of interest, such object and/or substances comprising dust and/or pigment and/or ink and/or fabric and/or adhesives.

In a further embodiment the surface artificial texture comprises an image projected on the object of interest.

The present invention further relates to a system for generating a 3D model of an object of interest, which system comprises at least one image acquisition device and a unit processing the acquired images, which system comprises means for generating a surface artificial texture on the object of interest.

In one embodiment means comprise objects and/or substances that can be applied on the object of interest, such objects and/or substances comprise dust and/or pigment and/or ink and/or fabric and/or adhesives.

In a further embodiment the means comprise at least one projector for projecting an image on the object of interest.

The present invention further relates to a method for generating a 3D model of an object of interest, which method comprises the following steps:
Structure from Motion processing of a plurality of sparse images acquired by one or more acquisition devices for generating a sparse 3D point cloud and a plurality of internal and external parameters of the acquisition devices obtained by processing said images,
obtaining from the sparse 3D point cloud and from the internal and external parameters of the acquisition devices, by a Multiview stereo processing, a dense 3D point cloud for said generation of the 3D model.

The method comprises the approximate calculation of the metric scale of the scene captured by the images on the basis of said data about focus point and depth of field of each image.

In a preferred but non limitative embodiment of the present invention a camera is used to acquire different images of an object. Therefore images are acquired from different angles such to obtain all the desired perspectives of the object. There are no specific restrictions as regards space or angle distances between the object of interest and the camera, and no restrictions about the order of acquisition of the photos. An object of known dimensions can be placed in the scene such to be visible in at least one photographic image such to provide a scale reference. Such input can also be provided upon saving the image. Therefore a suitable investigation is performed during and after all the images corresponding to the given object are acquired. The image processing therefore extracts the feature points from each image and finds their matches. Scale, rotation and lighting invariant descriptors are assigned to each point. The orientation of the camera and its internal and external parameters therefore are extracted from each acquired image.

Information about relative or absolute positions, that can be obtained from gyroscopes, magnetometers and depth sensors arranged in modern smartphones and in other electronic apparatuses, are suitably used to improve information about acquired positions. Particularly, by using information about focus point and depth of field contained in EXIF data, an estimation of the metric scale of the scene is obtained. Initially the exact focus point of the 2d photographic image is accurately determined by using image analysis techniques. Then scale invariant image processing algorithms are used to determine which subset of images has to be grouped for an efficient processing. Therefore such information is used to automatically extract internal and external parameters of all the cameras. Therefore multiview stereo algorithms are employed to extract a dense point cloud. The cloud obtained in this manner is then used to recreate an accurate three-dimensional model provided with texture that can be oriented and examined in the space.

In one embodiment the following steps are provided for each image:
I) estimating for each image the distance of the object from the acquisition device on the basis of said data about focus point and depth of field;
m) reprojecting for each image all points visible by the acquisition device in the image;
n) determining for each image the depth of the point closest to the optical center of the camera in the space of the image;
o) inserting for each image the ratio of the distance estimated at step I) to the depth determined at step n) in a list of scale candidates
p) determining the median of the list filled in at point o) as global scale factor;
q) rescaling the dense point cloud with the global scale factor.

The present invention relates to a system for generating a 3D model of an object of interest, which system comprises at least one image acquisition device and a unit processing the acquired images, wherein the processing unit is configured to perform the method described above from steps I) to q).

These and other characteristics and advantages of the present invention will be more clear from the following description of some non-limitative embodiments shown in annexed drawings, where:
Figure 1 is a typical example of photographic acquisition, wherein, while the individual stands still, pictures are acquired about the individual by a photographic apparatus provided with a camera;
Figure 2 is how the skin or other surface of interest can be provided with an artificial texture to improve the quality of the reconstruction: in Figure 2A a random pattern is projected on the surface by using a projector, while in Figure 2B the surface of interest is covered by ink or dusts;
Figure 3 is the procedure to estimate the metric scale of the reconstruction by using information contained in EXIF data of the image;
Figure 4 is a typical example of acquisition setup for photometric stereo;
Figure 5 is the robust procedure to estimate the normal field and the albedo of the surface of objects of interest.

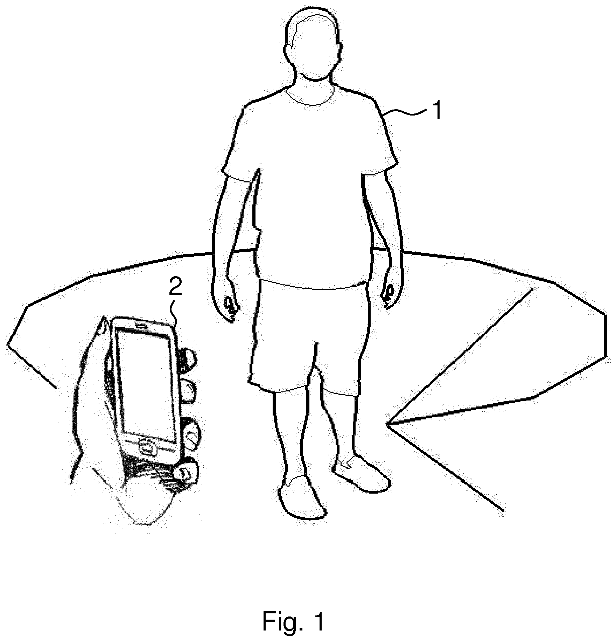

Figure 1 is a view of the object of interest, particularly a human being 1, who stands still while several pictures are acquired. The device used to take pictures can be any tool 2 equipped with a camera working in the visible spectrum. As an alternative pictures can be simultaneously acquired by using several and different devices. The individual of the reconstruction can be both a full-length individual and a specific part of the body. By way of example, figure 1 shows one of the possible acquisition procedures where the individual 1 rotates with respect to the acquisition device 2.

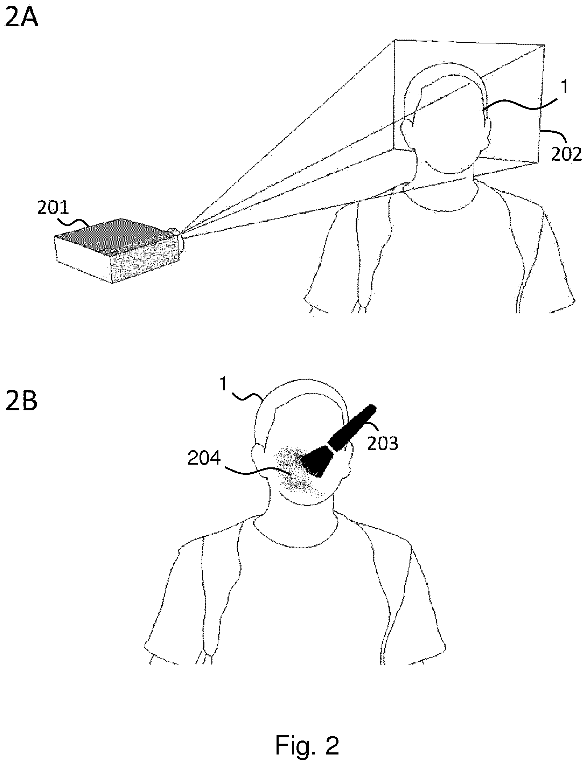

With reference to figure 2, according to a possible example of the present invention, the skin of the individual can be artificially provided with a texture such to enhance accuracy of reconstruction algorithms. Artificial texture allows the creation of matches on uniform or texture-free areas to be improved. This step is optional since reconstruction algorithms can work also without artificial textures. Texture can be made in several manners, by using any random or regular patterns. By way of example in figure 2A a projector 201 is used to project a random pattern of the skin of the individual 202. In order to provide large areas of the individual with a texture several projectors can be contemporaneously used. The projector and the individual have to keep still when acquiring pictures. Another example is shown in figure 2B, where the skin of the individual is provided with a texture using a inked brush 203. As an alternative the skin can be covered by other substances, including but not exclusively, dust, flour, face powder, talcum powder. In this case the individual is not asked to keep still.

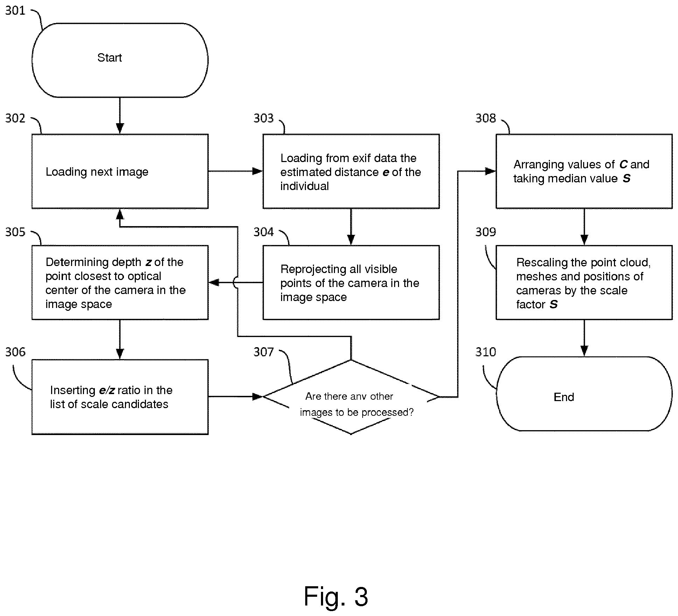

Figure 3 shows how the knowledge derived from gyroscopes, magnetometers or depth sensors available in most of the modern cameras and smartphones is used to refine position information obtained by means of other manners. An approximation of the metric scale of the scene is extracted by using the focus point and the field of depth contained in EXIF data. The used procedure is schematized in the diagram of figure 3. In block 302 an image is loaded and in block 303 the distance of the individual from the camera is estimated by using EXIF data of the image: the exact focus point in the photographic image 2d is estimated in a robust manner by intersecting the optical axis passing by the focus point with the model 3d. At 304, all the candidate points visible by the camera are projected in the image and the point whose projection is closest to the focus point is selected and its depth z is considered in 305. Therefore in block 306 the e/z quotient is inserted in the list of candidate scales. If, in block 307, several images have to be analysed, the procedure is repeated from block 302 to block 307 and the list of possible scale candidates is updated, otherwise block 308 takes place where the median of the list of scale candidates is taken as the global scale factor. In block 309 the value previously found is therefore used to rescale the point cloud and the polygon mesh.

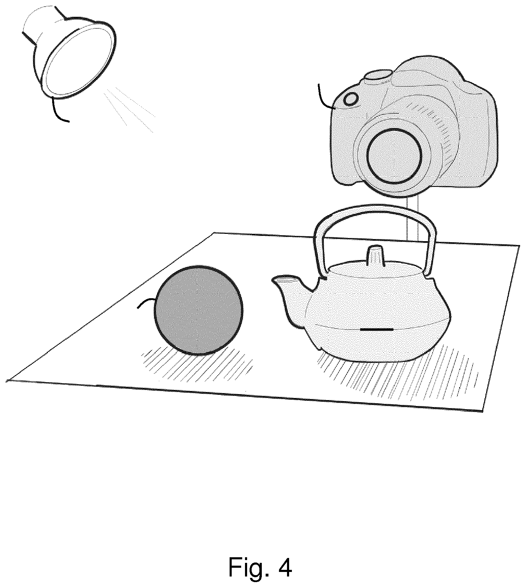

Figure 4 shows, by way of example, the devices that can be used for photometric stereo. More precisely, there is a light device composed of one or more light sources, a photographic device working in the visible spectrum, a sphere made of a reflecting material or an object of the same material of known geometry for light calibration, and the object of interest to be reconstructed.

The light device can be composed of one or more light sources. In the case of a single source it has to be moved at each photo acquisition. Anyway the light sources have to be placed such that the maximum reflection point on the calibration sphere is in the semi-sphere in front of the photographic device. On the photographic device and on the light sources polarizing filters can be placed such that the filter on the camera is orthogonal with respect to the one of the light sources.

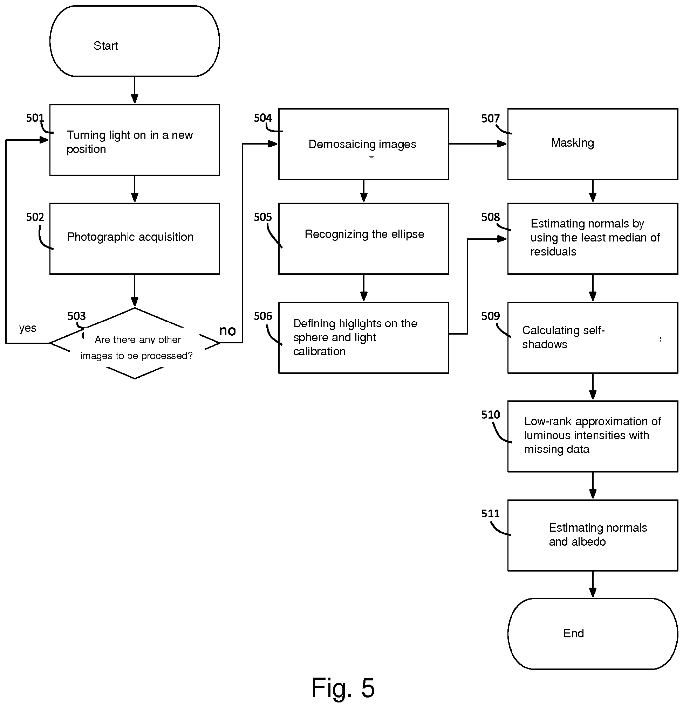

With reference to figure 5, it schematically shows the photometric stereo process allowing the orientation of the surface of an object of interest to be reconstructed by using the observation of the changes in luminous intensity due to light changes. The input of such process is a series of images captured by a fixed camera under different controlled light conditions, the output is the vector field of the normals and the albedo of the observed 3d surface. The photographic acquisition is described in blocks 501, 502, 503. Images are acquired by illuminating the object with only one light source, while limiting to the smallest extent the environmental light. The direction of the incident light illuminating the object of interest is changed at each photographic acquisition such as described in block 501. There are no specific restrictions about the positioning of the light source besides the fact that the maximum brightness point on the calibration sphere has to be visible by the camera. In block 502 images are acquired in RAW format and the process can be repeated as one desires as described in block 503. The minimum number of necessary images is three. In block 504 images are linearized by a demosaicing process.

In block 505, image processing techniques are used to detect the position of the ellipse corresponding to the apparent contour of the sphere inside the image. Pixels corresponding to the edges therefore are used as inputs, together with a tolerance value, for the step of robust detection of the parameters of the ellipse carried out by RanSaC. As an alternative a masking process can be used to determine pixels corresponding to the edges of the apparent contour of the sphere.

Then at block 506 the light calibration step takes place. The pixels of maximum brightness in the ellipse estimated at previous step are determined, therefore the ellipse enclosing them is determined and its center C is calculated. The direction of the light source is therefore determined as it follows. The back projection beam passing by C and its intersection P with the calibration sphere are considered (this process is independent from the measurement of the radius of the calibration sphere). Therefore the normal N to the sphere at point P is considered. The direction of the luminous intensity is given by the reflection of the back projection beam with respect to the normal N. If internal parameters of the camera are known, the back projection beam can be calculated by using the calibration matrix of the camera, otherwise an orthographic projection model is assumed and the back projection beam is assumed to be parallel to the optical axis.

In block 507 a masking process can be used to determine in the images the pixels corresponding to the object of interest whose surface is desired to be reconstructed, reducing the computational burden for the following steps.

In block 508, by using the directions of the light sources, the normals of the surface of interest are reconstructed by using a variant of Lmeds, as described below. Firstly subsets of 3 images are sampled from the set of all the images. For each pixel and for each random subset of images the orientations of the normals are estimated by solving a linear system whose coefficients are given by the lighting directions and whose known term is given by luminous intensities of sampled images. For each pixel the integer part of the residuals of the system is considered as the image subsets change and the solution minimizing the median of the residuals is determined. Therefore an estimation of the normal remains associated to each pixel. Therefore for each pixel the residuals with respect to the whole images are calculated as the integer part of the difference between luminous intensities and the scalar product between the estimated normal and the lighting directions. Such information is used by outlier diagnostics criteria (e.g. X84) to determine for each pixel which images do not observe Lambertian assumptions and are to be rejected for the estimation of the normals. Therefore the normal is calculated again by solving a linear system constructed by using lights and images considered as inliers. The linear system can be solved by using robust estimation techniques (IRLS) with the advantage of increasing the statistical efficiency of the method.

In block 509, the normals obtained in the preceding block are used to estimate the self-shadow areas in all the images. Such regions are treated as missing data in block 510, where matrix completion techniques and low-rank approximation techniques are used to estimate in a robust manner a subspace of dimension 3 on which luminous intensities are reprojected. By way of example, the GRASTA algorithm (He, J., Balzano, L., & Lui, J., 2011) can be used to recover values of pixels corresponding to self-shadows and at the same time to approximate the luminous intensities by a low-rank linear model where deviations from the Lambertian model are eliminated, within a given approximation. In block 511, luminous measurements obtained in this manner therefore can be used to estimate orientations by solving suitable linear systems or possibly by repeating the procedure described in block 508. The albedo of the surface is finally calculated as the norm of the normal orientations previously obtained.

## Claims

1. Method for generating a 3D model of an object of interest (1), which method comprises the following steps:
Structure from Motion processing of a plurality of sparse images acquired by one or more acquisition devices (2) for generating a sparse 3D point cloud and a plurality of internal and external parameters of the acquisition devices (2) obtained by processing said images,
obtaining, from the sparse 3D point cloud and from the internal and external parameters of the acquisition devices, by multiview stereo processing, a dense 3D point cloud for said generation of the 3D model,
**characterized in that**
it provides the reconstruction of the surface of said object of interest (1) by the following steps:
a) illuminating the object of interest (1) from different directions (501);
b) acquiring a plurality of images of the object of interest from a single point of view (502), each image corresponding to a different lighting direction;
c) automatically recognizing the lighting direction for each acquired image;
d) calculating the vector field of the surface normals;
e) calculating the albedo of the observed surface;
f) reconstructing the orientation of the surface to improve the 3D model obtained by said Structure from Motion and multiview stereo processing,
wherein the calculation of the vector field of the surface normals comprises the following steps:
d1) grouping the images in subsets of three images;
d2) estimating the normal (508) for each pixel by resolution of a linear system whose coefficients are given by the lighting directions calculated at step c) and whose known term is given by luminous intensities of acquired images, by considering the integer part of residuals of the system as the image subsets change, and determining the solution minimizing the median of residuals;
d3) outlier diagnostics by calculating for each pixel the residuals of all the images as the integer part of the difference between luminous intensities and the scalar product between the estimated normal and the light directions;
d4) calculating the normal as at step d2) by using only light and images not identified as outliers at step d3).

2. Method according to claim 1, wherein before step a) a calibration sphere is placed in proximity of the object of interest (1) such that the calibration sphere is captured in each image, and the automatic recognition of the lighting direction comprises the following steps:
c1) identifying the ellipse corresponding to the apparent contour of the calibration sphere in the image under examination (505);
c2) finding the pixels of maximum brightness in the ellipse;
c3) calculating the center of an ellipse enclosing the pixels of maximum brightness;
c4) recognizing the lighting direction as the reflection of a back projection beam passing by said center of the ellipse with respect to the normal to the calibration sphere in the intersection point between the back projection beam and the surface of the calibration sphere.

3. Method according to one or more of the preceding claims, wherein the normals calculated at step d) are used to estimate the self-shadow regions (509) in all the images, a subspace of dimension three being estimated for such regions by means of matrix completion techniques (510), on which subspace luminous intensities are re-projected, which luminous intensities are used to estimate the normals.

4. Method according to one or more of the preceding claims, wherein at step e) the albedo is calculated as the norm of the normal orientations obtained at step d).

## Patentansprüche

1. Verfahren zum Erzeugen eines 3D-Modells eines Objekts von Interesse (1), wobei das Verfahren die folgenden Schritte umfasst:
Struktur-aus-Bewegung-Verarbeiten einer Vielzahl von dünnbesetzten Bildern, die durch eine oder mehrere Erfassungsvorrichtungen (2) erfasst werden, zum Erzeugen einer dünnbesetzten 3D-Punktwolke und einer Vielzahl von internen und externen Parametern der Erfassungsvorrichtungen (2), die durch Verarbeiten der Bilder erhalten werden,
Erhalten einer dichten 3D-Punktwolke für die Erzeugung des 3D-Modells mittels Multiviewstereoverarbeitung aus der dünnbesetzten 3D-Punktwolke und aus den internen und externen Parametern der Erfassungsvorrichtungen,
**dadurch gekennzeichnet, dass**
es die Rekonstruktion der Fläche des Objekts von Interesse (1) durch die folgenden Schritte bereitstellt:
a) Beleuchten des Objekts von Interesse (1) aus verschiedenen Richtungen (501);
b) Erfassen einer Vielzahl von Bildern des Objekts von Interesse aus einer einzigen Sicht (502), wobei jedes Bild einer anderen Lichtrichtung entspricht;
c) automatisches Erkennen der Lichtrichtung für jedes erfasste Bild;
d) Berechnen des Vektorfeldes der Flächennormalen;
e) Berechnen der Albedo der beobachteten Fläche;
f) Rekonstruieren der Ausrichtung der Fläche, um das 3D-Modell, das durch die Struktur-aus-Bewegung- und die Multiviewstereoverarbeitung erhalten wird, zu verbessern,
wobei die Berechnung des Vektorfeldes der Flächennormalen die folgenden Schritte umfasst:
d1) Gruppieren der Bilder in Untersätze von drei Bildern;
d2) Schätzen der Normalen (508) für jedes Pixel durch Auflösung eines Linearsystems, dessen Koeffizienten durch die Lichtrichtungen, die in Schritt c) berechnet werden, gegeben sind und deren bekannter Term durch Lichtstärken von erfassten Bildern gegeben ist, durch Berücksichtigen des ganzzahligen Teils von Residuen des Systems, wenn sich die Bilduntersätze ändern, und Bestimmen der Lösung,
die den Median von Residuen minimiert;
d3) Ausreißerdiagnose durch Berechnen der Residuen aller Bilder als den ganzzahligen Teil der Differenz zwischen Lichtstärken und dem Skalarprodukt zwischen der geschätzten Normalen und den Lichtrichtungen für jedes Pixel;
d4) Berechnen der Normalen wie in Schritt d2) nur unter Verwendung von Licht und Bildern, die in Schritt d3) nicht als Ausreißer identifiziert werden.

2. Verfahren nach Anspruch 1, wobei vor Schritt a) eine Kalibrierkugel in der Nähe des Objekts von Interesse (1) platziert wird, derart, dass die Kalibrierkugel in jedes Bild aufgenommen wird, und die automatische Erkennung der Lichtrichtung die folgenden Schritte umfasst:
c1) Identifizieren der Ellipse, die der offensichtlichen Kontur der Kalibrierkugel im Bild, das untersucht wird, entspricht (505);
c2) Finden der Pixel mit maximaler Helligkeit in der Ellipse;
c3) Berechnen der Mitte einer Ellipse, die die Pixel mit maximaler Helligkeit umschließt;
c4) Erkennen der Lichtrichtung als die Reflexion eines Rückprojektionsstrahls, der die Mitte der Ellipse passiert, mit Bezug auf die Normale zur Kalibrierkugel im Schnittpunkt zwischen dem Rückprojektionsstrahl und der Fläche der Kalibrierkugel.

3. Verfahren nach einem oder mehreren der vorhergehenden Ansprüche, wobei die Normalen, die in Schritt d) berechnet werden, verwendet werden, um die Eigenschattenregionen (509) in allen Bildern zu schätzen, wobei ein Unterraum von Dimension drei für derartige Regionen mittels Matrixfertigstellungstechniken geschätzt werden (510), wobei in dem Unterraum Lichtstärken reprojiziert werden, wobei die Lichtstärken verwendet werden, um die Normalen zu schätzen.

4. Verfahren nach einem oder mehreren der vorhergehenden Ansprüche, wobei in Schritt e) die Albedo als die Norm der normalen Ausrichtungen, die in Schritt d) erhalten werden, berechnet wird.

## Revendications

1. Procédé de génération d'un modèle 3D d'un objet d'intérêt (1), lequel procédé comprend les étapes suivantes consistant à :
Structurer à partir du traitement de mouvement d'une pluralité d'images éparses acquises par un ou plusieurs dispositifs d'acquisition (2) pour générer un nuage de points 3D épars et une pluralité de paramètres internes et externes des dispositifs d'acquisition (2) obtenus en traitant lesdites images,
obtenir, à partir du nuage de points 3D épars et des paramètres internes et externes des dispositifs d'acquisition, par traitement stéréo multivue, un nuage de points 3D dense pour ladite génération du modèle 3D,
**caractérisé en ce que**.
il assure la reconstruction de la surface dudit objet d'intérêt (1) par les étapes suivantes consistant à :
a) éclairer l'objet d'intérêt (1) à partir de différentes directions (501) ;
b) acquérir une pluralité d'images de l'objet d'intérêt à partir d'un point de vue unique (502), chaque image correspondant à une direction d'éclairage différente ;
c) reconnaître automatiquement la direction d'éclairage pour chaque image acquise ;
d) calculer le champ vectoriel des normales de surface ;
e) calculer l'albédo de la surface observée ;
f) reconstruire l'orientation de la surface pour améliorer le modèle 3D obtenu par ladite structure à partir du traitement stéréo de mouvement et multivue,
où le calcul du champ vectoriel des normales de surface comprend les étapes suivantes consistant à :
d1) regrouper les images en sous-ensembles de trois images ;
d2) estimer la normale (508) pour chaque pixel par résolution d'un système linéaire dont les coefficients sont donnés par les directions d'éclairage calculées à l'étape c) et dont le terme connu est donné par les intensités lumineuses des images acquises, en considérant la partie entière des résidus du système lorsque les sous-ensembles d'images changent, et en déterminant la solution
minimiser la médiane des résidus ;
d3) des diagnostics aberrants en calculant pour chaque pixel les résidus de toutes les images en tant que partie entière de la différence entre les intensités lumineuses et le produit scalaire entre la normale estimée et les directions de lumière ;
d4) calculer la normale comme à l'étape d2) en utilisant uniquement de la lumière et des images non identifiées comme aberrantes à l'étape d3).

2. Procédé selon la revendication 1, où, avant l'étape a), une sphère d'étalonnage est placée à proximité de l'objet d'intérêt (1) de telle sorte que la sphère d'étalonnage est capturée dans chaque image, et la reconnaissance automatique de la direction d'éclairage comprend les étapes suivantes consistant à :
c1) identifier l'ellipse correspondant au contour apparent de la sphère d'étalonnage dans l'image examinée (505) ;
c2) trouver les pixels de luminosité maximale dans l'ellipse ;
c3) calculer le centre d'une ellipse renfermant les pixels de luminosité maximale ;
c4) reconnaître la direction d'éclairage comme étant la réflexion d'un faisceau de rétroprojection passant par ledit centre de l'ellipse par rapport à la normale à la sphère d'étalonnage dans le point d'intersection entre le faisceau de rétroprojection et la surface de la sphère d'étalonnage.

3. Procédé selon une ou plusieurs des revendications précédentes, où les normales calculées à l'étape d) sont utilisées pour estimer les régions d'auto-ombre (509) dans toutes les images, un sous-espace de dimension trois étant estimé pour de telles régions au moyen de techniques de complétion de matrice (510), sur lesquelles des intensités lumineuses de sous-espace sont re-projetées, lesquelles intensités lumineuses sont utilisées pour estimer les normales.

4. Procédé selon une ou plusieurs des revendications précédentes, où à l'étape e) l'albédo est calculé comme la norme des orientations normales obtenues à l'étape d).
